(19) Europäisches Patentamt / European Patent Office / Office européen des brevets

(11) **EP 4 692 432 A1**

(12) **EUROPEAN PATENT APPLICATION**
published in accordance with Art. 153(4) EPC

(43) Date of publication:
**11.02.2026 Bulletin 2026/07**

(21) Application number: **24780315.8**

(22) Date of filing: **26.03.2024**

(51) International Patent Classification (IPC):
**D01F 6/84** (2006.01)     **C08L 67/04** (2006.01)
**D01F 6/92** (2006.01)

(52) Cooperative Patent Classification (CPC):
**C08L 67/04; D01F 6/84; D01F 6/92**

(86) International application number:
**PCT/JP2024/011960**

(87) International publication number:
**WO 2024/204205 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023052684**

(71) Applicants:
• **Kaneka Corporation**
  **Osaka-shi, Osaka 530-8288 (JP)**
• **Mizuno Corporation**
  **Osaka-shi, Osaka 541-8538 (JP)**

(72) Inventors:
• **OKURA, Tetsuo**
  **Osaka 566-0072 (JP)**
• **MIHAYASHI, Tsuyoshi**
  **Osaka 566-0072 (JP)**
• **OHTA, Koki**
  **Osaka 559-8510 (JP)**

(74) Representative: **Vossius & Partner**
**Patentanwälte Rechtsanwälte mbB**
**Siebertstrasse 3**
**81675 München (DE)**

(54) **RESIN COMPOSITION FOR MONOFILAMENT AND USE THEREOF, AND METHOD FOR PRODUCING MONOFILAMENT**

(57)     Provided is a monofilament containing a poly(3-hydroxyalkanoate)-based resin composition and having high strength and elongation. A resin composition for monofilaments including a poly(3-hydroxyalkanoate)-based resin component, in which the resin composition has a melting point peak temperature of 140°C or higher and a crystal melting enthalpy of 65 J/g or less as calculated from all melting peaks in differential scanning calorimetry.

EP 4 692 432 A1

## Description

### Technical Field

The present invention relates to a monofilament resin composition containing a poly(3-hydroxyalkanoate)-based resin, a monofilament, artificial turf, and a method for producing a monofilament.

### Background Art

A large amount of petroleum-derived plastic is disposed of every year, and shortage of landfills and environmental pollution which are caused by a large amount of these refuse materials have been raised as serious problems. In recent years, microplastics have represented a major problem in marine environments.

In particular, recent studies show that there are a large amount of fragments of broken artificial turf as microplastics in nearby waters, against which immediate action needs to be taken. It is assumed that artificial turf is broken by, for example, walking of people, and washed away with rainwater to the sea.

A poly (3-hydroxyalkanoate)-based resin is a material that has excellent seawater degradability, and can solve environmental problems caused by plastic disposed of. PTL 1 discloses a film or fiber to which stretchability is imparted by stretching aliphatic polyester.

### Citation List

### Patent Literature

PTL 1: International Publication No. WO 2020/230807

### Summary of Invention

### Technical Problem

PTL 1 discloses a stretchable film or stretchable fiber containing an aliphatic polyester copolymer and having a specific crystal structure and orientation degree, but there is room for improvement in productivity on an industrial scale because the film or fiber is produced by performing stretching treatment after acquiring a molded article once.

In view of the circumstances described above, an object of the present invention is to provide a monofilament containing a poly(3-hydroxyalkanoate)-based resin composition and having high strength and elongation.

### Solution to Problem

The present inventors have intensively conducted studies for solving the above-described problems, and resultantly found that a monofilament having high strength and elongation can be produced with good productivity by using a poly(3-hydroxyalkanoate)-based resin composition having a high melting point and a low crystal melting enthalpy, leading to completion of the present invention.

That is, the present invention relates to a resin composition for monofilaments which contains a poly(3-hydroxyalkanoate)-based resin component and which has a melting point peak temperature of 140°C or higher and a crystal melting enthalpy of 65 J/g or less in differential scanning calorimetry.

In addition, the present invention relates to a monofilament containing the resin composition and having a fineness of 15 to 5,000 dtex, a tensile strength of 0.5 to 6 cN/dtex and a tensile elongation of 50% or more, and to artificial turf in which a turf yarn is implanted in a base fabric, the turf yarn including the monofilament.

Further, the present invention relates to a method for producing a monofilament containing the resin composition for monofilaments, the method including the following steps (i) and (ii) in the stated order:

(i) extruding the resin composition in a molten state from a spinning nozzle, and then performing cooling to form a raw yarn; and
(ii) stretching the raw yarn in at least one direction.

### Advantageous Effects of Invention

According to the present invention, a monofilament containing a poly(3-hydroxyalkanoate)-based resin composition and having high strength and elongation can be provided. In addition, the monofilament of the present invention can be preferably used for artificial turf and the like. In addition, a monofilament can be produced with good productivity by using the resin composition of the present invention.

**Brief Description of Drawings**

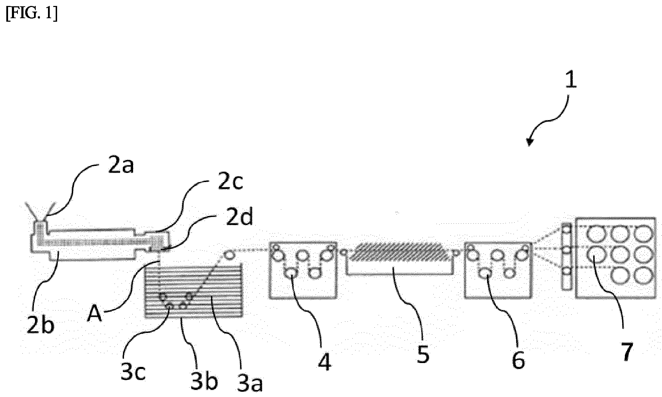

FIG. 1 is a schematic diagram of an apparatus for producing monofilaments.

**Description of Embodiments**

Hereinafter, embodiments of the present invention will be described, but the present invention is not limited to the following embodiments.

A resin composition for monofilaments according to the present embodiment (also referred to as a "poly(3-hydroxyalkanoate)-based resin composition") is a resin composition for monofilaments which contains a poly(3-hydroxyalkanoate)-based resin component and in which in differential scanning calorimetry, a melting point peak temperature is 140°C or higher and a crystal melting enthalpy is 65 J/g or less.

(Poly(3-hydroxyalkanoate)-based resin composition)

The poly(3-hydroxyalkanoate) resin composition may be a single poly(3-hydroxyalkanoate)-based resin, or a mixture of two or more poly(3-hydroxyalkanoate)-based resins.

The poly(3-hydroxyalkanoate) resin component according to the present embodiment preferably contains at least two copolymers of a 3-hydroxybutyrate unit and another 3-hydroxyalkanoate unit which differ in type and/or content ratio of the hydroxyalkanoate unit because it is easy to control a melting point and a crystal melting enthalpy described later.

The other 3-hydroxyalkanoate unit means a 3-hydroxyalkanoate unit other than a 3-hydroxybutyrate unit.

The poly(3-hydroxyalkanoate)-based resin is preferably a polymer containing 3-hydroxyalkanoate units, specifically a polymer containing units each represented by the following general formula (1).

$$[-CHR-CH_2-CO-O-] \qquad (1)$$

In the general formula (1), R represents an alkyl group $C_pH_{2p+1}$, and p represents an integer of 1 to 15. R is, for example, a linear or branched alkyl group such as a methyl group, an ethyl group, a propyl group, a methylpropyl group, a butyl group, an isobutyl group, a t-butyl group, a pentyl group or a hexyl group. p is preferably 1 to 10, and more preferably 1 to 8.

The poly(3-hydroxyalkanoate)-based resin is particularly preferably a poly(3-hydroxyalkanoate)-based resin produced from microorganisms. The poly(3-hydroxyalkanoate)-based resin produced from microorganisms contains 3-hydroxyalkanoate units all as (R)-3 hydroxyalkanoate units.

The poly (3-hydroxyalkanoate)-based resin composition according to the present embodiment has a melting point of 140°C or higher and a crystal melting enthalpy of 65 J/g or less. The melting point and the crystal melting enthalpy defined by, for example, differential operation calorimetry are as follows.

In an endothermic curve obtained when an aluminum pan is filled with 4 to 10 mg of a resin sample, and the resin sample is melted by raising the temperature from 30°C to 180°C at a rate of 10°C/min under a nitrogen stream using a differential scanning calorimeter, the temperature at which the amount of heat absorption is the largest is defined as a melting point (also referred to as a "melting point peak temperature"), and the amount of heat absorption calculated from a region of the melting point peak is defined as a crystal melting enthalpy. The crystal melting enthalpy is an index of the crystallinity degree, and a low crystal melting enthalpy means a low crystallinity degree.

The poly(3-hydroxyalkanoate)-based resin contains 3-hydroxyalkanoate units (in particular, units represented by the general formula (1)) in an amount of preferably 50 mol% or more, more preferably 60 mol% or more, and still more preferably 70 mol% or more of all constituent units. The poly(3-hydroxyalkanoate)-based resin may contain only one or more types of 3-hydroxyalkanoate units as constituent units of the polymer, or may contain, in addition to one or more types of 3-hydroxyalkanoate units, other units (for example, 4-hydroxyalkanoate units).

Examples of the method for producing the inventive poly(3-hydroxyalkanoate)-based resin composition of the present invention having a melting peak temperature and a crystal melting enthalpy calculated from a melting peak, which are melting behaviors, in the present application, include a method in which the copolymerization ratio of the monomers for forming the copolymer is appropriately adjusted when the poly(3-hydroxyalkanoate)-based resin is a copolymer, a method in which a component other than the poly(3-hydroxyalkanoate)-based resin component, such as a plasticizer, is mixed with the poly(3-hydroxyalkanoate)-based resin component, and a method in which at least two poly(3-hydroxyalkanoate)-based resins differing in melting behaviors are mixed. Particularly preferable is a method in which at least two polyhydroxyalkanoate-based resins differing in melting behaviors. Specifically, it is preferable to mix at least two poly(3-hydroxyalkanoate)-based resins differing in crystal melting enthalpy of resin alone. By this, the poly(3-hydroxyalkanoate)-based resin composition can be easily made to have a melting point peak temperature of 140°C or higher and a crystal melting enthalpy of 65 J/g or less as calculated from all melting peaks in differential scanning calorimetry.

The poly(3-hydroxyalkanoate)-based resin is preferably a homopolymer or a copolymer containing a 3-hydroxybutyrate unit (hereinafter, 3-hydroxybutyrate may be referred to as "3HB"). Particularly preferably, all 3-hydroxybutyrate units are (R)-3 hydroxybutyrate units. The poly(3-hydroxyalkanoate)-based resin is preferably a copolymer of a 3-hydroxyalkanoate unit and another hydroxyalkanoate unit.

The other hydroxyalkanoate unit means a hydroxyalkanoate unit other than a 3-hydroxybutyrate unit.

Specific examples of the poly(3-hydroxyalkanoate)-based resin include poly(3-hydroxybutyrate), poly(3-hydroxybutyrate-co-3-hydroxypropionate), poly(3-hydroxybutyrate-co-3-hydroxyvalerate) (abbreviation: P3HB3HV), poly(3-hydroxybutyrate-co-3-hydroxyvalerate-3-hydroxyhexanoate), poly(3-hydroxybutyrate-co-3-hydroxyhexanoate) (abbreviation: P3HB3HH), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), and poly(3-hydroxybutyrate-co-3-hydroxyundecanoate), and poly(3-hydroxybutyrate-co-4-hydroxybutyrate) (abbreviation: P3HB4HB). Poly(3-hydroxybutyrate-co-3-hydroxyhexanoate) and poly(3-hydroxybutyrate-co-4-hydroxybutyrate) are particularly preferable from the viewpoint of securement of both strength and elongation of the monofilament, productivity, and the like.

When the poly(3-hydroxyalkanoate)-based resin component contains a copolymer of a 3-hydroxybutyrate unit and another hydroxyalkanoate unit, the average content ratio of the 3-hydroxybutyrate units and the other hydroxyalkanoate unit to all monomer units forming the poly(3-hydroxyalkanoate)-based resin component is preferably 3-hydroxybutyrate unit/another hydroxyalkanoate = 93/7 to 80/20 (mol%/mol%), more preferably 92/8 to 82/18 (mol%/mol%), and still more preferably 90/10 to 84/16 (mol%/mol%), from the viewpoint of securing both the tensile strength and tensile elongation of the monofilament and the productivity.

The average content ratio of each type of monomer units to all monomer units forming the poly(3-hydroxyalkanoate)-based resin component can be determined by a method known to those skilled in the art, for example, a method described in WO 2013/147139 A, paragraph [0047]. The average content ratio means a molar ratio of each type of monomer units to all monomer units constituting the poly(3-hydroxyalkanoate)-based resin component, and means, in the case where the poly(3-hydroxyalkanoate)-based resin component is a mixture of two or more poly(3-hydroxyalkanoate)-based resins, a molar ratio of each type of monomer units contained in the entire mixture.

When the poly(3-hydroxyalkanoate)-based resin component according to the present embodiment contains two or more copolymers of a 3-hydroxybutyrate unit and another hydroxyalkanoate unit which differ in type and/or content ratio of the other hydroxyalkanoate unit, the poly(3-hydroxyalkanoate)-based resin component preferably contains a copolymer of a 3-hydroxybutyrate unit and the other hydroxyalkanoate unit in which the content ratio of the other hydroxyalkanoate unit is 6 mol% or less (which may be referred to as a "copolymer (A)", hereinafter), and a copolymer of a 3-hydroxybutyrate unit and another hydroxyalkanoate unit in which the content ratio of the other hydroxyalkanoate unit is 24 mol% or more (which may be referred to as a "copolymer (B)", hereinafter).

A copolymer of a 3-hydroxybutyrate unit and another hydroxyalkanoate unit in which the content ratio of the other hydroxyalkanoate unit is 6 mol% or less is likely to have a melting point of 140°C or higher, and thus can be preferably used because the melting point of a poly(3-hydroxyalkanoate)-based resin composition containing a mixture of two or more poly(3-hydroxyalkanoate)-based copolymers is easily adjusted to 140°C or higher, so that there is a tendency that crystallization during processing into monofilaments can be fast.

In the copolymer of a 3-hydroxybutyrate unit and another hydroxyalkanoate unit in which the content ratio of the other hydroxyalkanoate unit is 6 mol% or less, the upper limit of the content ratio of the other hydroxyalkanoate is preferably 5 mol% or less, more preferably 4 mol% or less, and particularly preferably 3 mol% or less. The lower limit is preferably 0.1 mol% or more, more preferably 0.5 mol% or more, and particularly preferably 1 mol% or more.

A copolymer of a 3-hydroxybutyrate unit and another hydroxyalkanoate unit in which the content ratio of the other hydroxyalkanoate unit is 24 mol% or more has a low crystallinity degree or is substantially amorphous, and thus ensures that the crystal melting enthalpy of a poly(3-hydroxyalkanoate)-based resin composition containing two or more poly(3-hydroxyalkanoate)-based copolymers is easily adjusted to 65 J/g or less, that is, the crystallinity degree of the resin composition is easily reduced. Therefore, monofilaments can be easily stretched, so that elongation of the monofilament can be increased to 50% or more. For this reason, the copolymer can be preferably used.

In the copolymer of a 3-hydroxybutyrate unit and another hydroxyalkanoate unit in which the content ratio of the other hydroxyalkanoate unit is 24 mol% or more, the upper limit of the content ratio of the other hydroxyalkanoate is preferably 25 mol% or more, more preferably 26 mol% or more, and particularly preferably 27 mol% or more. The upper limit is preferably 99 mol% or less, more preferably 50 mol% or less, still more preferably 40 mol% or less, and particularly preferably 30 mol% or less.

When a component of the poly(3-hydroxyalkanoate) resin composition according to the present embodiment contains a copolymer of a 3-hydroxybutyrate unit and another hydroxyalkanoate unit in which the content ratio of the other hydroxyalkanoate unit is 24 mol% or more, the content ratio of the copolymer (B) in the poly(3-hydroxyalkanoate)-based resin composition preferably 20 mass% or more and 50 mass% or less because crystallization during processing into monofilaments is fast, and the elongation of the monofilaments can be increased to 50% or more.

The poly(3-hydroxyalkanoate)-based resin composition according to the present embodiment may contain, in addition to the copolymer (A) and the copolymer (B), a copolymer of a 3-hydroxybutyrate unit and another hydroxyalkanoate unit in which the content ratio of the other hydroxyalkanoate unit is more than 6 mol% and less than 24 mol% (which may be referred to as a "copolymer (C)", hereinafter).

The weight average molecular weight of the poly(3-hydroxyalkanoate)-based resin is not particularly limited, but is preferably 200,000 to 2,000,000, more preferably 250,000 to 1,500,000, and still more preferably 300,000 to 1,000,000 from the viewpoint of easily obtaining preferred strength and elongation.

When the poly(3-hydroxyalkanoate)-based resin component is a mixture of two or more poly(3-hydroxyalkanoate)-based resins, the weight average molecular weight of each poly(3-hydroxyalkanoate)-based resin is not particularly limited, but the weight average molecular weight of the entire poly(3-hydroxyalkanoate)-based resin component is preferably 200,000 to 2,000,000, more preferably 250,000 to 1,500,000, and still more preferably 300,000 to 1,000,000 from the viewpoint of easily obtaining preferred strength and elongation.

The weight average molecular weight of the poly(3-hydroxyalkanoate)-based resin or the poly(3-hydroxyalkanoate)-based resin component can be measured in terms of polystyrene by gel permeation chromatography (HPLC GPC system manufactured by Shimadzu Corporation) using a chloroform solution. As a column in the gel permeation chromatography, a column suitable for measuring the weight average molecular weight may be used.

The method for producing a poly(3 -hydroxyalkanoate)-based resin is not particularly limited, and may be a production method based on chemical synthesis or a production method with microorganisms. Among them, a production method with microorganisms is preferable. As the production method with microorganisms, a known method can be applied. For example, as bacteria producing copolymers of 3-hydroxybutyrate and other hydroxyalkanoates, P3HB3HV and P3HB3HH producing bacteria such as Aeromonascaviae, P3HB4HB producing bacteria such as Alcaligeneseutrophus and the like are known. In particular, with regard to P3HB3HH, the Alcaligenes eutrophus AC32 strain (Alcaligenes eutrophus AC32, FERM BP-6038) into which a P3HA synthetase group gene has been introduced in order to enhance the productivity of P3HB3HH (T. Fukui, Y Doi, J. Bateriol, 179, p 4821-4830 (1997)) and the like are more preferable, and microbial cells obtained by culturing these microorganisms under appropriate conditions to accumulate P3HB3HH in the cells are used. Besides the above-described microorganisms, genetically modified microorganisms into which various poly(3-hydroxyalkanoate)-based resin synthesis-related genes have been introduced may be used in conformity to a poly(3-hydroxyalkanoate)-based resin to be produced, or culture conditions including the type of substrate may be optimized.

The method for obtaining two or more poly(3-hydroxyalkanoate)-based resins is not particularly limited, and may be a method for obtaining a blend by a microbiological production or a method for obtaining a blend by chemical synthesis. Three or more resins may be melt-kneaded with an extruder, a kneader, a Banbury mixer, a roll or the like to obtain a blend, or two or more resins may be dissolved in a solvent, mixed, and dried to obtain a blend.

(Other resins)

The resin composition for monofilaments according to the present embodiment may contain a resin other than a poly(3-hydroxyalkanoate)-based resin as long as the effects of the invention are not impaired. Examples of the other resin include aliphatic polyester-based resins such as polybutylene succinate adipate, polybutylene succinate, polycaprolactone and polylactic acid, and aliphatic aromatic polyester-based resins such as polybutylene adipate terephthalate, polybutylene sebacate terephthalate and polybutylene azelate terephthalate. As the other resin, only one resin may be contained, or two or more resins may be contained.

The content of the other resin is not particularly limited, but is preferably 30 parts by weight or less, more preferably 20 parts by weight or less, and still more preferably 10 parts by weight or less, based on total 100 parts by weight of the poly(3-hydroxyalkanoate)-based resin component. The lower limit of the content of the other resin is not particularly limited, and may be 0 parts by weight.

(Additives)

The resin composition for monofilaments according to the present embodiment may contain additives as long as the effects of the present invention are not impaired. As the additive, for example, a crystallization nucleating agent, a lubricant, a plasticizer, an antistatic agent, a flame retardant, a conductive agent, a heat insulating agent, a crosslinking agent, an antioxidant, an ultraviolet absorber, a colorant, an inorganic filler, an organic filler, an antiseptic agent, a hydrolysis inhibitor, and the like can be used according to a purpose. Additives having biodegradability are particularly preferable.

Examples of the crystallization nucleating agent include pentaerythritol, orotic acid, aspartame, cyanuric acid, glycine, zinc phenylphosphonate, and boron nitride. Among them, pentaerythritol is preferable because it has a particularly excellent effect of accelerating the crystallization of the poly(3-hydroxyalkanoate)-based resin component. The amount of the crystallization nucleating agent used is not particularly limited, but is preferably 0.1 to 5 parts by weight, more preferably 0.5 to 3 parts by weight, and still more preferably 0.7 to 1.5 parts by weight, based on total 100 parts by weight of the poly(3-hydroxyalkanoate)-based resin component. As the crystallization nucleating agent, one crystallization nucleating agent may be used, or two or more crystallization nucleating agents may be used, and the use ratio thereof can be appropriately adjusted according to a purpose.

Examples of the lubricant include behenic acid amide, oleic acid amide, erucic acid amide, stearic acid amide, palmitic acid amide, N-stearyl behenic acid amide, N-stearyl erucic acid amide, ethylene bisstearic acid amide, ethylene bisoleic acid amide, ethylene biserucic acid amide, ethylene bislauryl acid amide, ethylene biscapric acid amide, p-phenylene bisstearic acid amide, and polycondensates of ethylenediamine, stearic acid and sebacic acid. Among them, behenic acid amide and erucic acid amide are preferable because they have a particularly excellent lubricant effect on the poly(3-hydroxyalkanoate)-based resin component. The amount of the lubricant used is not particularly limited, but is preferably 0.01 to 5 parts by weight, more preferably 0.05 to 3 parts by weight, and still more preferably 0.1 to 1.5 parts by weight, based on total 100 parts by weight of the poly(3-hydroxyalkanoate)-based resin component. As the lubricant, one lubricant may be used, or two or more lubricants may be used, and the use ratio thereof can be appropriately adjusted according to a purpose.

Examples of the plasticizer include glycerin ester-based compounds, citric acid ester-based compounds, sebacic acid ester-based compounds, adipic acid ester-based compounds, polyether ester-based compounds, benzoic acid ester-based compounds, phthalic acid ester-based compounds, isosorbide ester-based compounds, polycaprolactone-based compounds, and dibasic acid ester-based compounds. Among them, glycerin ester-based compounds, citric acid ester-based compounds, sebacic acid ester-based compounds, and dibasic acid ester-based compounds are preferable because they have a particularly excellent plasticizing effect on the poly(3-hydroxyalkanoate)-based resin component. Examples of the glycerin ester-based compound include glycerin diacetomonolaurate. Examples of the citric acid ester-based compound include tributyl acetylcitrate. Examples of the sebacic acid ester-based compound include dibutyl sebacate. Examples of the dibasic acid ester-based compound include benzyl methyl diethylene glycol adipate. The amount of the plasticizer used is not particularly limited, but is preferably 1 to 20 parts by weight, more preferably 2 to 15 parts by weight, and still more preferably 3 to 10 parts by weight, based on total 100 parts by weight of the poly(3-hydroxyalkanoate)-based resin component. As the plasticizer, one crystallization nucleating agent may be used, or two or more crystallization nucleating agents may be used, and the use ratio thereof can be appropriately adjusted according to a purpose.

(Method for producing resin composition)

The resin composition according to the present embodiment can be produced by melt-kneading the components. The melt-kneading may be followed by pelletization. Detailed description is given below.

First, a poly(3-hydroxyalkanoate)-based resin component and optional additives are added, and melt-kneaded with an extruder, a kneader, a Banbury mixer, a roll or the like to prepare a resin composition. The resin composition may be extruded in a strand shape, and then cut to obtain pellets in the form of particles having a cylindrical shape, an elliptic cylinder shape, a spherical shape, a cubic shape, a rectangular parallelepiped shape or the like. It is desirable that the prepared pellets be sufficiently dried at 40 to 80°C to remove moisture, and then used for subsequent molding.

The temperature at which the melt-kneading is performed depends on a melting point, a melt viscosity and the like of a resin used, and thus cannot be simply defined, but the resin temperature of the melt-kneaded product at an outlet of a spinning nozzle is preferably 135 to 200°C, more preferably 140 to 195°C, still more preferably 145 to 190°C, and particularly preferably 150 to 185°C. If the resin temperature of the melt-kneaded product is lower than 135°C, the poly(3-hydroxyalkanoate)-based resin component may remain unmelted. If the resin temperature is higher than 200°C, the poly(3-hydroxyalkanoate)-based resin component may be thermally decomposed.

The term "resin composition for monofilaments" according to the present embodiment refers to a resin composition used for producing a monofilament through a molding step. Here, the term "monofilament" refers to a yarn-shaped molded article composed of one fiber, and in the present application, the monofilament is not particularly limited as long as it can be formed from a resin.

[Monofilament]

The monofilament according to the present embodiment contains the resin composition for monofilament.

The tensile strength of the monofilament containing the poly(3-hydroxyalkanoate)-based resin composition according to the present embodiment is preferably 0.4 to 6 cN/dtex, more preferably 0.5 to 5 cN/dtex, and still more preferably 0.6 to 4 cN/dtex.

The tensile elongation of the monofilament containing the poly(3-hydroxyalkanoate)-based resin composition according to the present embodiment is preferably 50% or more, more preferably 70% or more, and still more preferably 100% or more.

When the tensile strength and the tensile elongation of the monofilament according to the present embodiment are in the above-described ranges, it is possible to suppress breakage by elongation in the case of occurrence of stress such as tension while maintaining practical strength, so that a wide range of applications can be covered. In particular, the monofilament of the present application has a characteristic that it not only elongates in tension, but also regains a substantially original length as if it were a rubber string when stress is unloaded. In the case of use for a turf yarn of artificial turf, breakage can be suppressed against rubbing during walking of people and sports movement on the artificial turf, which is particularly preferable.

The term "tensile strength and tensile elongation of the monofilament" according to the present embodiment means tensile strength and tensile elongation measured at an initial length of 20 mm and a speed of 20 mm/min according to JIS L 1015: 2021 "Test methods for man-made staple fibres".

For measurement of tensile strength and tensile elongation, for example, a tensile tester (Autograph AG-1 manufactured by Shimadzu Corporation) can be used.

The fineness of the monofilament containing the poly(3-hydroxyalkanoate)-based resin composition according to the present embodiment is preferably 15 to 5,000 dtex, more preferably 1,000 to 5,000 dtex, and still more preferably 1,000 to 3,000 dtex.

The fineness of the monofilament is a mass per unit length, and a mass (g) per 10,000 m is represented by a unit (dtex). The fineness of the monofilament can be measured by an automatic vibroscope method.

The monofilament containing the poly(3-hydroxyalkanoate)-based resin composition according to the present embodiment preferably has a fineness of 15 to 5,000 dtex, a tensile strength of 0.4 to 6 cN/dtex, and a tensile elongation of 50% or more.

Examples of the shape of a cross-section (cross-section perpendicular to the longitudinal direction) of the monofilament according to the present embodiment include a circular shape (conceptually including an elliptic shape), a quadrangular shape (conceptually including a rectangular shape and a rhombic shape), a Y-shape, an X-shape, an H-shape, and a multilobar shape.

The monofilament according to the present embodiment can be preferably used for marine materials, agricultural materials, civil engineering materials, sports equipment materials, automobile materials, medical materials, and the like. Specifically, the monofilament according to the present embodiment can be used, for example, as a fishing line, a fishing net, an aquaculture net, a seaweed seed and seedling yarn, a turf yarn for artificial turf, a toothbrush bristle material, a filter for extracting beverages (woven fabric for tea bag), a pest control net, an animal-preventing net, a suture thread, a surgical net, a stent, a prosthetic material, a filament for 3D printing, a tennis gut, a hook and loop fastener, a tire cord, a printing screen, a wig, a hose reinforcing material, a weft knitted fabric for clothing, a cord for cutting grass (wire rod), a net for screen windows, a woven fabric, tarbaulin, a core filament of a filament core spun yarn, a ribbon, or the like.

[Method for producing monofilament]

In a production method for producing a monofilament according to the present embodiment, a monofilament is produced by a melt-spinning method.

The production method includes a step (i) of discharging a molten product of a resin composition from a spinning nozzle, and then performing cooling to form a raw yarn, and a step (ii) of stretching the raw yarn in at least one direction.

The method for producing a monofilament according to the present embodiment is only required to include the step (i) and the step (ii), and may be continuous or discontinuous, but is preferably carried out continuously from the viewpoint of ease of stretching.

Hereinafter, the production method will be described by showing, as an example, a method for producing a monofilament using a monofilament production apparatus 1 shown in FIG. 1.

(Step (i))

The step (i) is a step of discharging a molten product of the resin composition from a spinning nozzle, and then performing cooling to form a raw yarn.

The method for the cooling is not particularly limited as long as it is capable of cooling the molten product of the resin composition to a temperature at which the resin composition can be crystallized, followed by solidification. For example, the molten product can be cooled with a water bath, cold air, or the like.

In the step (i), first, the resin composition according to the present embodiment is loaded into a material loading unit 2a as shown in FIG. 1.

Next, the material loaded from the material loading unit 2a is kneaded while being heated with a kneading extruder 2b, thereby obtaining the molten product. The material loaded may be a pellet-shaped resin composition, or the components for forming the resin composition may be separately loaded.

The kneading extruder 2b is a screw extruder. The kneading extruder 2b may be a single-screw extruder or a twin-screw extruder.

With a spinning nozzle 2d having a discharge hole, the molten product obtained using the kneading extruder 2d is discharged from the discharge hole to obtain a yarn-shaped resin composition (raw yarn (A)) in a molten state.

The flow rate of the molten product discharged from the discharge hole of the spinning nozzle 2d is adjusted with a gear pump 2c as necessary.

The temperature of the spinning nozzle 2d is preferably 150 to 190°C, and more preferably 160 to 180°C, for example.

The spinning nozzle 2d has one or more discharge holes, and may have a plurality of discharge holes.

When the spinning nozzle 2d has a plurality of discharge holes, a plurality of monofilaments can be produced at a time.

Examples of the shape of the discharge hole include a circular shape (conceptually including an elliptic shape), a quadrangular shape (conceptually including a rectangular shape and a rhombic shape), a Y-shape, an X-shape, an H-shape, and a multilobar shape.

For the size of the discharge hole, for example, when the shape of the discharge hole is a circular shape, the diameter of the discharge hole is preferably 0.5 mm to 20 mm, and more preferably 1.0 mm to 10 mm.

When the shape of the discharge hole is a circular shape, length (L) of discharge hole/diameter (D) of discharge hole, in other words, L/D is preferably 1 to 10 and more preferably 2 to 5.

The amount of the molten product discharged from one discharge hole is preferably 0.20 to 2.0 kg/hr, and more preferably 0.40 to 1.2 kg/hr.

In the step (i), the resin composition is cooled by making the raw yarn pass through a water bath 3a. In this step, by allowing the crystallization of at least the surface portion of the raw yarn to proceed, sticking to a tool 3c such as a roll or a bar that changes the direction of the raw yarn in the water bath 3a can be suppressed

The temperature of the water bath 3a is preferably 25 to 60°C, and more preferably 30 to 40°C.

In the step (i), by adjusting the time of passage of the raw yarn through the water bath 3a at 25 to 60°C, temperature adjustment in the subsequent stretching step (ii) can be facilitated while the raw yarn is inhibited from sticking in a softened state to the tool 3c that changes the direction of the raw yarn.

The time of passage of the raw yarn through the water bath 3a at 25 to 60°C in the step (i) is preferably 2 minutes or less, more preferably 1 minute or less because crystallization of the raw yarn is inhibited from excessively proceeding and temperature adjustment in the stretching step (ii) is facilitated. This enables suppression of hardening of the raw yarn. Accordingly, the raw yarn in the step (ii) is easily stretched. As a result, the strength of the monofilament can be easily increased.

The time of passage of the raw yarn through the water bath 3a at 25 to 60°C in the step (i) can be adjusted by the distance over which the raw yarn passes in the water bath 3a and the rate of take-up by a take-up roll unit 4.

(Step (ii))

In the step (ii), the raw yarn is stretched in at least one direction.

The specific method for stretching is not particularly limited, but a method is preferable in which the raw yarn is extended in a stretch direction to perform stretching. The phrase "extending the raw yarn in a stretch direction" means pulling the raw yarn in a stretch direction.

The method for extending the raw yarn in the stretch direction is not particularly limited. When stretching is performed in a batch mode, both ends of the raw yarn may be gripped and pulled in the stretch direction.

When the raw yarn is stretched in a conveyance direction while being continuously conveyed, the stretching in the conveyance direction can be performed by, for example, the raw yarn can be stretched in the transporting direction by making a difference in rotation speed of the roll between the take-up roll unit 4 and a stretching roll unit 6. The stretch ratio in the conveyance direction can be determined by a ratio between the rotation speed of the roll before stretching and the rotation speed of the roll after stretching.

In the step (ii), by stretching the raw yarn, the orientation of crystals of the polymer component contained in the raw yarn can be enhanced, whereby the strength of the monofilament can be enhanced.

In the step (ii), the raw yarn in which sticking to the roll is reduced and crystallization is prevented from excessively proceeding in the step (i) is preferably stretched by a difference in speed between the take-up roll unit 4 and the stretching roll unit 6.

The stretch ratio in the step (ii) is preferably 3 or more.

From the viewpoint of easily obtaining a filament having higher strength and elongation, the stretch ratio is more preferably 4 or more, still more preferably 5 or more, and particularly preferably 6 or more.

In an aspect where the take-up roll unit 4 and the stretching roll unit 6 are used, the stretch ratio can be determined by the following expression.

$$\text{Stretch ratio} = \text{speed (m/min) of stretching roll unit 6/speed (m/min) of take-up roll unit 4}$$

The speed (m/min) of the stretching roll unit is a length per unit time of the raw yarn conveyed by the stretching roll. When stretching is performed with two or more stretching rolls in the step (ii) (when stretching is performed with a multi-stage stretching roll), the highest speed is defined as a speed (m/min) of the stretching roll.

The speed (m/min) of the take-up roll unit is a length per unit time of the raw yarn taken up by the take-up roll.

In stretching in step (ii), the raw yarn is preferably heated at an appropriate temperature in a heating unit 5 for performing stretching with stability, and the temperature of the raw yarn is preferably 60°C or lower, more preferably 55°C or lower, and particularly preferably 50°C or lower. The temperature is preferably 25°C or higher, more preferably 30°C or higher, and particularly preferably 35°C or higher because there is little influence of the surrounding temperature.

Here, for enhancing the orientation of the crystals of the polymer component, it is desirable that a raw yarn in which crystals of the polymer component are formed and crystallization does not excessively proceed be stretched in a series of steps. This is because, in the case of a poly-(3-hydroxyalkanoate)-based resin, if crystallization of the polymer component does not proceed, not only sticking easily occurs and it is not easy to perform molding into a raw yarn, but also it is difficult to form oriented crystals, so that it becomes difficult to sufficiently increase the strength of the monofilament. If the crystallization of the polymer component excessively proceeds, the raw yarn is hardly stretched due to heavy solidification, and forced pulling of the raw yarn for stretching the raw yarn leads to breakage of the raw yarn, so that a monofilament cannot be produced. If a part of crystals is melted by heating for stretching the raw yarn in which crystallization excessively proceeds, sticking easily occurs due to melting of crystals of the raw yarn surface, and thus it is not easy to perform heating so as to enable stretching.

In the present embodiment, the raw yarn is heated and stretched by a difference in speed between the take-up roll unit 4 and the stretching roll unit, whereby the elastic modulus of the raw yarn is lower in heated portions than in other portions, and stretching occurs mainly in the heated portions, so that the stretching state is easily controlled, and as a result, a monofilament with stable fineness is likely to be obtained.

The method for heating the raw yarn in the heating unit 5 is not particularly limited as long as it is a method in which the raw yarn is adjusted to a desired temperature, and examples thereof include a method in which the raw yarn is made to pass through a water bath whose temperature is controlled to fall within the temperature range, a method in which air whose temperature is controlled is applied to the raw yarn, a method using an auxiliary heating unit such as an infrared heater, a method in which the raw yarn is brought into contact with a roll whose temperature is adjusted to a predetermined temperature, and a method using a heating furnace whose temperature is adjusted to a predetermined temperature. These methods may be used alone or in combination of two or more thereof.

[Artificial turf]

Artificial turf according to the present embodiment includes a base fabric formed in a sheet shape and a turf material (also referred to as a "turf yarn") including the monofilament according to the present embodiment. Generally, artificial turf is produced by planting, on a base fabric, a large number of turf materials that imitate turf leaves.

In the artificial turf according to the present embodiment, the base fabric, for which a plain woven fabric containing a thermoplastic resin such as polypropylene or polyethylene, or the like is preferably used, may be another woven fabric, or may contain another material.

In the artificial turf according to the present embodiment, the turf material may have a shape on a cylinder, or a flat shape.

The following items are listed as preferred aspects in the present disclosure, but should not be construed as limiting the present invention.

[Item 1]

A resin composition for monofilaments including a poly(3-hydroxyalkanoate)-based resin component, in which the resin composition has a melting point peak temperature of 140°C or higher and a crystal melting enthalpy of 65 J/g or less as calculated from all melting peaks in differential scanning calorimetry.

[Item 2]

The resin composition for monofilaments according to item 1, in which the poly(3-hydroxyalkanoate)-based resin component contains two or more copolymers of a 3-hydroxybutyrate unit and another hydroxyalkanoate unit which differ in type and/or content ratio of the other hydroxyalkanoate unit.

[Item 3]

The resin composition for monofilaments according to item 1 or 2, in which the poly(3-hydroxyalkanoate)-based resin component contains

a copolymer (A) of a 3 -hydroxybutyrate unit and another hydroxyalkanoate unit in which the content ratio of the other hydroxyalkanoate unit is 6 mol% or less, and

a copolymer (B) of a 3-hydroxybutyrate unit and another hydroxyalkanoate unit in which the content ratio of the other hydroxyalkanoate unit is 24 mol% or more.

[Item 4]

The resin composition for monofilaments according to item 3, in which a content ratio of the copolymer (B) to the poly(3-hydroxyalkanoate)-based resin component is 20 wt% or more and 50 wt% or less.

[Item 5]

The resin composition for monofilaments according to any one of items 2 to 4, in which the other hydroxyalkanoate unit is a 3-hydroxyhexanoate unit.

[Item 6]

A monofilament including the resin composition for monofilaments according to any one of items 1 to 5.

[Item 7]

The monofilament according to Item 6, which has a fineness of 15 to 5,000 dtex, a tensile strength of 0.4 to 6 cN/dtex, and a tensile elongation of 50% or more.

[Item 8]

The monofilament according to Item 7, in which the fineness is in a range of 1,000 to 5,000 dtex.

[Item 9]

Artificial turf in which a turf yarn is implanted in a base fabric, the turf yarn including the monofilament according to any one of items 6 to 8.

[Item 10]

A method for producing a monofilament containing the resin composition for monofilaments according to items 1 to 5, the method including the following steps (i) and (ii) in the stated order:

(i) discharging the resin composition in a molten state from a spinning nozzle, and then performing cooling to form a raw yarn; and
(ii) stretching the raw yarn in at least one direction.

**Examples**

Hereinafter, the present invention will be described in detail by way of examples, but the technical scope of the present invention is not limited to these examples.
The substances used in examples and comparative examples are shown below.

[Poly(3-hydroxyalkanoate)-based resin composition (P3HA)]

P3HB3HH-1 (copolymer (A)): P3HB3HH (average content ratio 3HB/3HH = 97.2/2.8 (mol%/mol%), weight average molecular weight: 660,000 g/mol)
The P3HB3HH-1 was produced by a method described in WO 2019/142845, Example 2.
P3HB3HH-2 (copolymer (B)): P3HB3HH (average content ratio 3HB/3HH = 71.8/28.2 (mol%/mol%), weight average molecular weight: 660,000 g/mol)
The P3HB3HH-2 was produced by a method described in WO 2019/142845, Example 9.
P3HB3HH-3: X131A(Kaneka Biodegradable Polymer PHBH (registered trademark) (Average content ratio 3HB/3HH = 94/6 (mol%/mol%), weight average molecular weight: 600,000 g/mol)

[Additives]

Additive -1: Pentaerythritol (manufactured by Mitsubishi Chemical Corporation: NEULIZER P)
Additive -2: Behenic acid amide (BNT-22H manufactured by Nippon Fine Chemical Co., Ltd.)

The method of evaluation performed in Examples and Comparative Examples will be described below.

[Measurement of Melting Point Peak Temperature and Crystal Melting Enthalpy in Differential Scanning Calorimetry]

In a DSC curve obtained when about 4 to 10 mg of the poly(3-hydroxyalkanoate)-based resin composition obtained in each of examples and the comparative example was weighed out, and the temperature was raised from 30°C to 180°C at a temperature raising rate of 10°C/min under a nitrogen stream using a differential scanning calorimeter (Model DSC 25 manufactured by TA Instruments), a melting point peak temperature at which the amount of heat absorption was the largest was determined. In the DSC curve, baselines before the start of melting and after the end of melting were connected by a straight line, and the total heat amount calculated as an area of a melting region surrounded by the straight line and the DSC curve was determined as a crystal melting enthalpy.

[Fineness of monofilament]

The fineness of a monofilament was measured by an automatic vibroscope method.

[Tensile strength and tensile elongation of monofilament]

For the tensile strength and the tensile elongation of the monofilament, the monofilament was pulled at an initial length of 20 mm and a speed of 20 mm/min according to JIS L 1015: 2021 "Test methods for man-made staple fibres" using a tensile tester (Autograph AG-1 manufactured by Shimadzu Corporation). The strength at the time of occurrence of breakage was tensile strength, and the elongation until breakage was tensile elongation.

(Example 1)

[Preparation of pellets of poly(3-hydroxyalkanoate)-based resin composition)

To a blend of 30 wt% (content to all components of P3HA) of P3HB3HH-1, 30 wt% of P3HB3HH-2 and 40 wt% of P3HB3HH-3 were blended, 1 part by weight of an additive- 1 (content based on 100 parts by weight of all components of P3HA) and 1 part by weight of an additive-2 (content based on 100 parts by weight of all components of P3HA) were added, and the mixture was blended. The obtained resin mixture was loaded into a unidirectional twin screw extruder φ26mm in which the cylinder and spinning nozzle temperature was set to 150°C, and the resin mixture was extruded. The extruded resin material was made to pass through a water tank filled with hot water at 40°C, thereby solidifying the strand, which was cut with a pelletizer to obtain pellets of a resin composition.

The melting point peak temperature and the crystal melting enthalpy of the obtained poly(3-hydroxyalkanoate)-based resin composition were measured, and the results showed that the melting point peak temperature was 152°C, and the crystal melting enthalpy was 57 J/g.

[Preparation of monofilament]

Pellets of the poly(3-hydroxyalkanoate)-based resin composition were loaded into a single-screw extruder (screw diameter: 30 mm) in which a cylinder and a spinning nozzle were set at 165°C, and the pellets were melted, discharged from the spinning nozzle having five circular discharge holes with a diameter of 1.5 mm, made to pass through a hot water bath set at 35°C, and taken up with a take-up roll at a speed of 6 m/min to obtain five raw yarns, which were subsequently taken up with a stretching roll at a speed of 40 m/min while passing through a hot water tank having a length of 3 m and filled with hot water at 40°C, thereby obtaining five monofilaments at a stretch ratio of 7. The stretch ratio at during preparation of the monofilament was defined by the following expression.

$$\text{Stretch ratio} = \text{speed (m/min) of stretching roll/speed (m/min) of take-up roll}$$

The fineness, the tensile strength and the tensile elongation of the obtained monofilament were measured, and the results showed that the fineness was 2,500 dtex, the tensile strength was 1.0 cN/dtex and the tensile elongation was 140%.

(Example 2)

Except that the blending ratio of raw materials for the poly(3-hydroxyalkanoate)-based resin composition of Example 1 was changed to that shown in Table 1, the same procedure as in Example 1 was carried out to prepare pellets of the composition and a monofilament. The melting point peak temperature and the crystal melting enthalpy of the obtained resin composition, and the fineness, the tensile strength and the tensile elongation of the monofilament were measured. Table 1 shows the evaluation results.

(Comparative Example 1)

Except that the blending ratio of raw materials for the poly(3-hydroxyalkanoate)-based resin composition of Example 1 was changed to that shown in Table 1, the same procedure as in Example 1 was carried out to prepare pellets of the composition and a monofilament. The melting point peak temperature and the crystal melting enthalpy of the obtained resin composition, and the fineness, the tensile strength and the tensile elongation of the monofilament were measured. Table 1 shows the evaluation results.

[Table 1]

| | P3HA resin composition (pellet) | | | | | | | Stretching condition | | Monofilament | | |
| | Formulation | | | | | Physical property | | | | Physical property | | |
| | P3HA | | | Additive | | | | | | | | |
| | P3HB3H-H-1 Copolymer (A) | P3HB3H-H-2 Copolymer (B) | P3HB3HH-3 HH:60mol% | Additive-1 | Additive-2 | Melting point peak temperature | Crystal melting enthalpy | Stretch ratio | Stretching temperature (Hot water tank) | Fineness | Tensile strength | Tensile elongation |
| | (wt%) | (wt%) | (w%) | (pbw) | (pbw) | (°C) | (J/g) | (times) | (°C) | (dtex) | (cN/dtex) | (%) |
| Example 1 | 30 | 30 | 40 | 1 | 1 | 152 | 57 | 7 | 40 | 2500 | 1.0 | 140 |
| Example2 | 38 | 38 | 24 | 1 | 1 | 151 | 55 | 7 | 40 | 2300 | 0.7 | 180 |
| Comparative Example 1 | 0 | 0 | 100 | 1 | 1 | 145 | 75 | 7 | 40 | 2200 | 1.8 | 40 |

The monofilaments containing the poly(3-hydroxyalkanoate)-based resin composition of examples have sufficient tensile strength and elongation, and can be used for various purposes by selecting the fineness according to a use purpose.

**Reference Signs List**

1   apparatus for producing monofilament
2a   material loading unit
2b   kneading extruder
2c   gear pump
2d   spinning nozzle
3a   water bath
3b   water tank
3c   tool
4   take-up roll unit
5   heating unit
6   stretching roll unit
7   winding roll unit

**Claims**

1. A resin composition for monofilaments comprising a poly(3-hydroxyalkanoate)-based resin component,
   wherein the resin composition has a melting point peak temperature of 140°C or higher and a crystal melting enthalpy of 65 J/g or less as calculated from all melting peaks in differential scanning calorimetry.

2. The resin composition for monofilaments according to claim 1, wherein the poly(3-hydroxyalkanoate)-based resin component contains two or more copolymers of a 3-hydroxybutyrate unit and another hydroxyalkanoate unit which differ in type and/or content ratio of the other hydroxyalkanoate unit.

3. The resin composition for monofilaments according to claim 1 or 2, wherein the poly(3-hydroxyalkanoate)-based resin component contains

   a copolymer (A) of a 3-hydroxybutyrate unit and another hydroxyalkanoate unit in which the content ratio of the other hydroxyalkanoate unit is 6 mol% or less, and
   a copolymer (B) of a 3-hydroxybutyrate unit and another hydroxyalkanoate unit in which the content ratio of the other hydroxyalkanoate unit is 24 mol% or more.

4. The resin composition for monofilaments according to claim 3, wherein a content ratio of the copolymer (B) to the poly(3-hydroxyalkanoate)-based resin component is 20 wt% or more and 50 wt% or less.

5. The resin composition for monofilaments according to claim 2, wherein the other hydroxyalkanoate unit is a 3-hydroxyhexanoate unit.

6. A monofilament comprising the resin composition for monofilaments according to claim 1 or 2.

7. The monofilament according to claim 6, which has a fineness of 15 to 5,000 dtex, a tensile strength of 0.4 to 6 cN/dtex, and a tensile elongation of 50% or more.

8. The monofilament according to claim 7, wherein the fineness is in a range of 1,000 to 5,000 dtex.

9. Artificial turf in which a turf yarn is implanted in a base fabric, the turf yarn including the monofilament according to claim 6.

10. A method for producing a monofilament containing the resin composition for monofilaments according to claim 1 or 2, the method comprising the following steps (i) and (ii) in the stated order:

(i) discharging the resin composition in a molten state from a spinning nozzle, and then performing cooling to form a raw yarn; and
(ii) stretching the raw yarn in at least one direction.

[FIG. 1]

## INTERNATIONAL SEARCH REPORT

| International application No. |
| --- |
| **PCT/JP2024/011960** |

| | |
| --- | --- |
| **A.** | **CLASSIFICATION OF SUBJECT MATTER** |

*D01F 6/84*(2006.01)i; *C08L 67/04*(2006.01)i; *D01F 6/92*(2006.01)i
FI:  D01F6/84 303Z; C08L67/04; D01F6/92 307A

According to International Patent Classification (IPC) or to both national classification and IPC

| | |
| --- | --- |
| **B.** | **FIELDS SEARCHED** |

Minimum documentation searched (classification system followed by classification symbols)

D01F6/84:C08K3/00-13/08; C08L1/00-101/16; D01F6/92; D01F6/62; D01F8/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2002-371431 A (KANEGAFUCHI CHEM IND CO., LTD.) 26 December 2002 (2002-12-26)<br>example 1, paragraph [0006] | 1-10 |
| A | CN 103628174 A (TSINGHUA UNIVERSITY) 12 March 2014 (2014-03-12)<br>example 1, paragraph [0008] | 1-10 |
| A | WO 2012/133231 A1 (THE UNIVERSITY OF TOKYO) 04 October 2012 (2012-10-04)<br>example 1, paragraph [0003] | 1-10 |
| A | WO 2017/122679 A1 (TOKYO INSTITUTE OF TECHNOLOGY) 20 July 2017 (2017-07-20)<br>example 5 | 1-10 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 692 432 A1**

| INTERNATIONAL SEARCH REPORT<br>Information on patent family members | | | International application No.<br><br>**PCT/JP2024/011960** | |
|---|---|---|---|---|
| Patent document<br>cited in search report | Publication date<br>(day/month/year) | Patent family member(s) | | Publication date<br>(day/month/year) |
| JP 2002-371431 A | 26 December 2002 | EP 1266984 A1<br>example 1, paragraph [0007]<br>US 2003/0088052 A1 | | |
| CN 103628174 A | 12 March 2014 | CN 105063789 A<br>CN 105063790 A | | |
| WO 2012/133231 A1 | 04 October 2012 | EP 2690207 A1<br>example 1, paragraph [0003]<br>US 2014/0088288 A1<br>CN 103443339 A | | |
| WO 2017/122679 A1 | 20 July 2017 | EP 3404130 A1<br>example 5<br>US 2019/0003082 A1 | | |

Form PCT/ISA/210 (patent family annex) (July 2022)

## REFERENCES CITED IN THE DESCRIPTION

**Patent documents cited in the description**

- WO 2020230807 A
- WO 2013147139 A
- WO 2019142845 A

**Non-patent literature cited in the description**

- **T. FUKUI ; Y DOI**. *J. Bateriol*, 1997, vol. 179, 4821-4830